# NEUE EUROPÄISCHE PATENTSCHRIFT

(11) **EP 1 154 226 B2**
(45) Veröffentlichungstag und Bekanntmachung des Hinweises auf die Entscheidung über den Einspruch: **18.01.2017**
(45) Hinweis auf die Patenterteilung: 04.01.2006
(21) Anmeldenummer: 01105634.8
(22) Anmeldetag: 07.03.2001
(51) Int. Cl.: G01B 11/24, G01B 11/10, G01B 11/255, B21B 38/04

(54) **Vorrichtung und Verfahren zur Messung der Dicke und Unrundheit von länglichen Werkstücken**
Procedure and device for measuring of thickness and unroundness of elongated objects
Procédé et dispositif pour mesurer l'épaisseur et l'excentricité d'objets longitudinaux

(30) Priorität: 11.05.2000 DE 10023172
(43) Veröffentlichungstag der Anmeldung: 14.11.2001
(73) Patentinhaber: LAP GmbH Laser Applikationen, D-21337 Lüneburg (DE)
(72) Erfinder: Hofmann, Karsten, 21354 Bleckede (DE)
(74) Vertreter: Hauck Patentanwaltspartnerschaft mbB

(56) Entgegenhaltungen:
- EP-A- 0 843 156
- DE-A- 4 037 383
- GB-A- 2 121 956
- US-A- 4 121 292
- US-A- 4 264 208
- US-A- 5 028 798
- PATENT ABSTRACTS OF JAPAN vol. 015, no. 116 (P-1182), 20. März 1991 (1991-03-20) & JP 03 006407 A (DAIDO STEEL CO LTD), 11. Januar 1991 (1991-01-11)
- PATENT ABSTRACTS OF JAPAN vol. 005, no. 191 (P-092), 5. Dezember 1981 (1981-12-05) & JP 56 117107 A (SUMITOMO METAL IND LTD), 14. September 1981 (1981-09-14)
- PATENT ABSTRACTS OF JAPAN vol. 007, no. 245 (P-233), 29. Oktober 1983 (1983-10-29) & JP 58 131503 A (KAWASAKI SEITETSU KK), 5. August 1983 (1983-08-05)
- PATENT ABSTRACTS OF JAPAN vol. 1998, no. 14, 31. Dezember 1998 (1998-12-31) & JP 10 260270 A (TOKYO ELECTRIC POWER CO INC:THE;HITACHI CABLE LTD), 29. September 1998 (1998-09-29)
- PATENT ABSTRACTS OF JAPAN vol. 010, no. 132 (P-456), 16. Mai 1986 (1986-05-16) & JP 60 253907 A (DAIDO TOKUSHUKO KK), 14. Dezember 1985 (1985-12-14)

## Beschreibung

Die Erfindung bezieht sich auf eine Vorrichtung zur Messung von Durchmesser und Unrundheit von länglichen Werkstücken, insbesondere von in ihrer Längsrichtung vorbewegten Rundprodukten an Walzstraßen, sowie auf Verfahren zur Messung von Durchmesser und Unrundheit bei solchen Werkstücken.

Es ist bekannt, in Walzwerken für Flachprodukte (Grobblech, Warmband) die Walzspalteinstellung über ein geschlossenes Regelsystem vorzunehmen. Zu diesem Zweck ist hinter dem letzten Walzgerüst ein Meßsystem angeordnet, das kontinuierlich die Dicke und gegebenenfalls die Planarität des gewalzten Produktes mißt und somit den Ist-Wert für das Regelsystem zur Verfügung stellt, welches dann über entsprechende Aktoren die Walzspaltenhöhe und die Walzspaltgeometrie, im Hinblick auf Maßhaltigkeit und Ebenheit des Produktes einstellt.

Es ist angestrebt, in Walzstraßen für Rundprodukte ebenfalls geschlossene Regelsysteme anzuwenden. Aus der EP 0 800 43 156 A 2 ist bekannt geworden, ein Schattenmeßsystem mit drei unter einem verschiedenen Winkel angeordneten Meßsystemen zu verwenden. Die Meßsysteme werden in ihrer Position verschwenkt, um den Durchmesser aus unterschiedlichen Richtungen zu messen.

Aus GB 2 121 956 ist es bekannt, drei Durchmesser aus jeweils um 120° versetzten Richtungen zu messen. Bei bekannter Lage und Form des zu messenden Gegenstands kann dann aus den gemessenen Durchmessern der größte und der kleinste Durchmesser errechnet werden.

Patent Abstracts of Japan zu JP 56 117107 beschreibt ein berührungsloses Meßverfahren, bei dem der Abstand zwischen einem Antastpunkt einer ersten Tangente und dem Schnittpunkt einer zweiten und einer dritten Tangente berechnet wird.

Die bekannte Vorrichtung und das Verfahren zur Messung von Durchmesser und Unrundheit liefern ungenaue Messwerte, wenn sogenannte "Gleichdick"-Konturen auftreten. "Gleichdick"-Konturen zeichnen sich durch die Eigenschaft aus, daß sie bei einer konventionellen Messung der Durchmesser aus verschiedenen Winkeln gleiche oder annähernd gleiche Durchmesserwerte besitzen. Mithin besitzt auch deren Schatten die gleiche Breite. Diese fehlende oder allenfalls geringe Differenz zwischen dem größten und dem kleinsten Durchmesser täuscht eine sehr geringe Unrundheit des zu messenden Werkstücks vor. Diese kann jedoch tatsächlich weit außerhalb der zulässigen Toleranzen liegen und muß von einem Meßsystem zuverlässig erkannt werden.

Aus JP 63-205504 sowie JP 62-39681 ist ein Verfahren zur Berechnung des Radiuses von Rundprodukten bekannt.

Der Erfindung liegt die Aufgabe zugrunde, eine Vorrichtung und ein Verfahren zur Messung von Durchmesser und Unrundheit zu schaffen, die bzw. das mit einem einfachen Mitteln eine schnelle und zuverlässige Messung bei Werkstücken erlaubt.

Erfindungsgemäß wird die Aufgabe durch ein Verfahren mit den Merkmalen nach Anspruch 1 und durch eine Vorrichtung mit den Merkmalen aus Anspruch 5 gelöst.

Die erfindungsgemäße Vorrichtung weist drei oder mehr Laserscanner auf. Jeder Laserscanner besitzt einen lichtempfindlichen Sensor mit einem Laser, der zur Beleuchtung eines Bereichs des Sensors auf diesen ausgerichtet ist. Die Laserstrahlen der Laserscanner sind für eine tangentiale Antastung des Werkstücks in einem Dreieck oder einem Vieleck um das Werkstück herum angeordnet. Besitzt die Vorrichtung beispielsweise drei Laserscanner, so bilden deren Laserstrahlen ein Dreieck, das um das Werkstück herum angeordnet ist. Erfindungsgemäß wird das Werkstück durch den Laserstrahl des Laserscanners derart beleuchtet, daß das Werkstück einen vollständig Innerhalb des ausgeleuchteten Bereichs des Sensors liegenden Schatten wirft, werden mit jedem Laserscanner zwei parallele Geraden bestimmt, die den maximalen Abstand zwischen zwei Außenkanten des Werkstücks auf gegenüberliegenden Seiten wiedergeben. Mit der Anordnung von drei oder mehr Laserscannern in ungefähr gleichen Winkelabständen, also 120°, 90°, 72° etc., entstehen drei oder mehr Paare von parallelen Geraden, die das Werkstück berühren. Diese Geraden ermöglichen eine Bestimmung des Durchmessers und der Unrundheit des Werkstücks unabhängig der Lage dessen Zentrums. Eine Verschiebung des Zentrum kann aus den gemessenen Daten durch Differenzbildung herausgerechnet werden.

In einer vorteilhaften Weiterführung der Vorrichtung ist diese drehbar in der von den Laserstrahlen aufgespannten Ebene angeordnet.

In einer vorteilhaften Weiterführung der Vorrichtung sind die drei Laserscanner derart angeordnet, daß sie ein gleichwinkliges Dreieck um das Werkstück aufspannen. Auch hier ermöglicht die Verwendung von drei Laserscannern, "Gleichdick"-Konturen mit wenigen Meßwerten schnell und zuverlässig zu erkennen.

Das erfindungsgemäße Meßverfahren erfolgt unter Verwendung von 3 oder mehr Laserscannern, indem in einem ersten Verfahrensschritt aus dem Schatten des Werkstücks für jeden Laserscanner eine oder zwei an der Außenkante anliegende Geraden, die parallel zu dem Laserstrahl verlaufen, d. h. in Richtung des Laserstrahls, ermittelt wird. Das Auftreten von einer oder zwei Schattenkanten des Werkstücks auf dem Sensor ist abhängig davon, ob der Laserscanner das Werkstück lediglich tangential beleuchtet oder den Sensor auf einer Breite so vollständig beleuchtet, daß das Werkstück einen vollständigen Schatten innerhalb des ausgeleuchteten Sensorbereiches wirft. In einem zweiten Verfahrensschritt wird aus je drei ermittelten Geraden durch eine Auswerteeinrichtung ein Kreis berechnet, der an den Geraden als Tangente anliegt. In den sich hieran anschließenden Verfahrensschritten wird der Meßvorgang zur Berechnung des Kreises mehrfach wiederholt und aus den gemessenen Kreisdurchmessern der Durchmesser und die Unrundheit des Werkstücks bestimmt.

In einer vorteilhaften Weiterbildung des Verfahrens werden die Laserscanner bei der Wiederholung der Messung um das Werkstück gedreht. Auf diese Weise wird eine bessere Ermittlung der Unrundheit bei unbekannter Orientierung des Werkstücks möglich.

Bevorzugt wird die Messung der Laserscanner synchronisiert auf ein Triggersignal hin erfolgen. Mit der synchronen Messung wird sichergestellt, daß eine radiale Bewegung des Werkstücks während der Messung nicht zu einer Verfälschung der Meßergebnisse führt.

In einer anderen Weiterbildung des erfindungsgemäßen Verfahrens messen die Laserscanner zu unterschiedlichen Zeitpunkten das Werkstück, und die Auswerteeinrichtung bestimmt aus den Zeitpunkten und den zugehörigen Meßwerten einen Bewegungsvektor für das Werkstück. Da die Auswerteeinrichtung sowohl die Meßwerte als auch deren Zeit berücksichtigen kann, ist es möglich, eine Bewegung des Werkstücks zwischen den Meßvorgängen zu erkennen und zu kompensieren.

Erfindungsgemäß werden, wenn mehr als drei nicht parallele Geraden ermittelt wurden, alle Tripel von Geraden zur Berechnung des Kreises verwendet. Bei einer hinreichenden Anzahl von Geraden ist es ebenfalls möglich rechnergestützt einen Ausschnitt der Oberflächenkontur zu rekonstruieren, so daß lokal eine präzise Bestimmung der Unrundheit möglich ist.

Bevorzugte Ausführungsbeispiele der erfindungsgemäßen Vorrichtungen werden anhand der nachfolgenden Figuren näher erläutert.
- Fig. 1: zeigt den Vergleich zwischen einem Gleichdick dritter Ordnung mit einem Kreis, der den gleichen Durchmesser aufweist,
- Fig. 2: zeigt die Messung eines Gleichdicks mit drei Triangulationssensoren,
- Fig. 3: zeigt die Messung mit Triangulationssensoren bei einem dezentrierten Objekt,
- Fig. 4: zeigt die Messung des Gleichdicks mit konkaven Seiten durch Triangulationsmessung,
- Fig. 5: zeigt die Messung eines Gleichdicks mit Laserscanmikrometern bei der Antastung mit drei Tangenten,
- Fig. 6: zeigt die Messung eines konvexen Gleichdicks mit Laserscanmikrometem bei der Antastung mit sechs Tangenten und
- Fig. 7: zeigt die Vorrichtung aus Fig. 6 bei einem dezentrierten Werkstück.

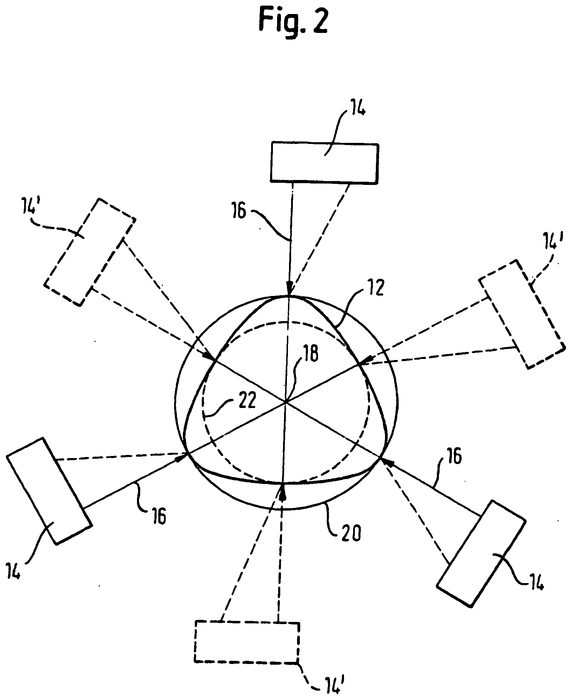

Die Triangulationsmeßverfahren gemäß Fign. 2 bis 4 sowie Fig. 5 das Verfahren nach entsprechen nicht der Erfindung.

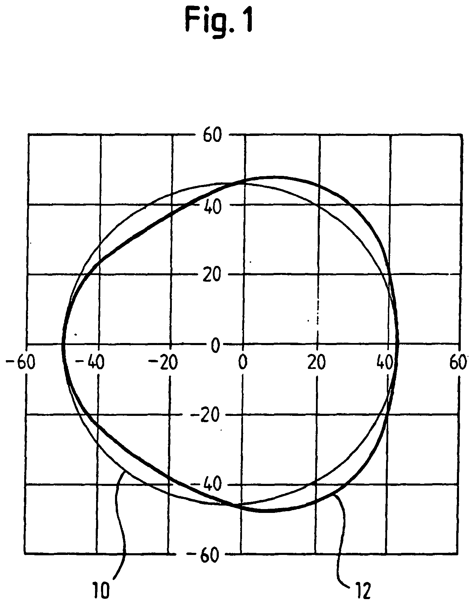

In Fig. 1 ist ein Gleichdick 12 dritter Ordnung dargestellt. Aus dem Vergleich mit dem Kreis 10 ist ersichtlich, daß der Gleichdick 12 in jedem Punkt einen Durchmesser besitzt, der dem Kreisdurchmesser entspricht. Dennoch weist der Gleichdick 12 eine Unrundheit auf, die außerhalb von zulässigen Fertigungstoleranzen einer Produktionslinie liegen kann. Theoretisch können Gleichdicke der Ordnung 2n+1 mit n = 0, 1, 2, ...... auftreten. In den zur Zeit gebräuchlichen Fertigungsverfahren treten bei Verwendung von 3 Walzen überwiegend Gleichdicke dritter Ordnung auf, deren Vermessung nachfolgend erläutert werden soll.

Die in Fig. 2 schematisch dargestellte Vorrichtung zur Messung des Gleichdicks 12 weist drei Triangulationssensoren 14 auf. Die Sensoren sind um das Gleichdick 12 angeordnet und derart ausgerichtet, daß ihre Laserstrahlen 16 einen 120° Winkel einschließen. Die Laserstrahlen 16 schneiden sich in einem Punkt 18, der zugleich das Zentrum des Gleichdicks 12 bildet. Bei der in Fig. 2 dargestellten Lage des Gleichdicks 12 ergibt die Messung, für den Abstand des Zentrums 18 zur Oberfläche des Gleichdicks 12 jeweils den gleichen Wert. Mit diesem Wert als Radius kann der Umkreis 20 des Gleichdicks bestimmt werden.

In der gestrichelt eingezeichneten Position der Triangulationssensoren 14' messen diese den minimalen Radius des Gleichdicks, der zur Bestimmung des eingeschriebenen Kreises 22 führt. Werden die Triangulationssensoren 14 in die mit 14' gekennzeichnete Position gedreht, so nimmt der Radius des gemessenen Kreises kontinuierlich ab.

Ist die Winkellage der Maxima bzw. Minima des Gleichdicks 12 nicht bekannt, so sind zur Erzielung einer hinreichenden Genauigkeit für die Unrundheitsbestimmung mindestens 4 gleichmäßig unter dem Umfang verteilte 3-Punkt Messungen erforderlich. Ab dieser Anzahl von Messungen kann der kleinste und der größte Durchmesser zuverlässig bestimmt werden.

Eineanfängliche Justierung der Triangulationssensoren stellt sicher, daß alle drei Laserstrahlen 16 sich im Mittelpunkt schneiden. Ferner wird mit der Verwendung von Präzisionszylindern bei der Justierung sichergestellt, daß dieser Mittelpunkt für alle drei Sensoren der gemeinsame Nullpunkt ist. Das zu prüfende Objekt muß sich im Nullpunkt dieser radialen Anordnung befinden. Jeder der beteiligten Sensoren mißt nun den Radius und übermittelt diesen an einen Auswerterechner, der den zugehörigen Kreis berechnet. Durch Drehung des Objekts in der Meßvorrichtung oder durch Drehung der Meßeinrichtung um das Objekt werden dann weitere Teildurchmesser ermittelt. Nach Drehung um 120° ist die Messung abgeschlossen und der Auswerterechner ermittelt nun den kleinsten sowie den größten Durchmesser und als Differenz hieraus die Unrundheit.

Um den erforderlichen Drehwinkel und damit die Meßdauer einzuschränken, kann die Meßvorrichtung um weitere Meßkopftripelmit jeweils 120° Versatz untereinander so erweitert werden, daß sie insgesamt wieder gleichmäßige Versatzwinkel aller Sensoren zueinander ergeben.

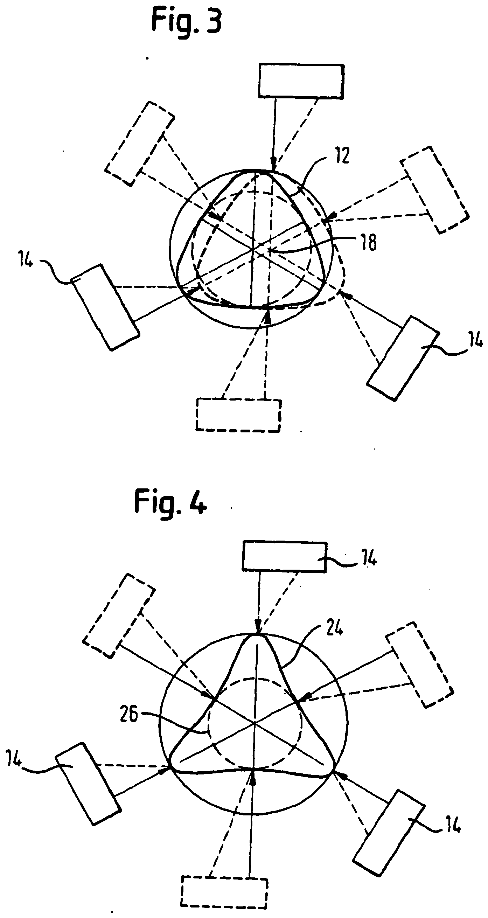

Die bei einer Verschiebung des Gleichdicks 12 gegenüber dem Zentrum 18 auftretenden Meßwerte sind in Fig. 3 schematisch dargestellt. Die der Meßvorrichtung zugeordnete Auswerteeinheit kann bei dem dargestellten Gleichdick das Auftreten eines solchen Meßfehlers daran erkennen, daß bei den Messungen der Triangulationssensoren keine gemeinsamen Radien auftreten. Bevorzugt wird dieser Meßfehler bei einer drehbaren Meßanordnung erkennt.

Fig. 4 zeigt die Messung eines Gleichdicks dritter Ordnung 24 mit konkaven Seiten. Die Messung von konkaven Seiten erfolgt mit den Triangulationssensoren 14 auf zuverlässige Art und Weise, da deren Laserstrahlen 16 auf das Zentrum des Gleichdicks 24 gerichtet sind. Mithin entspricht der so ermittelte Innenkreis 26 dem tatsächlich vorliegenden Innenradius.

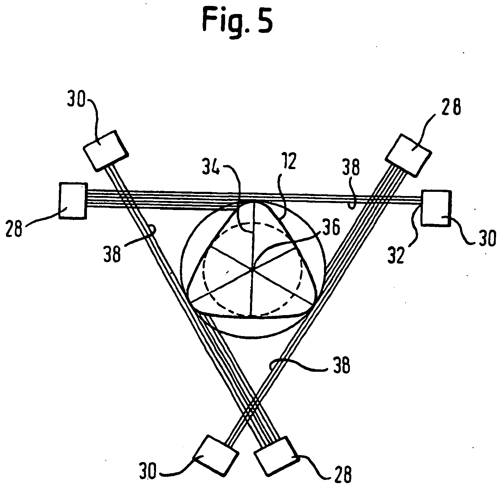

Fig. 5 zeigt eine Vorrichtung bestehend aus drei Laserscannern 28, 30, die zu einem Dreieck um Gleichdick 12 angeordnet sind. Der Laser 28 ist in der dargestellten Ausführungsform als ein Linienlaser ausgebildet und projiziert eine Linie auf den zugeordneten Sensor 30. Die Laserscanner sind derart um das Gleichdick 12 angeordnet, daß dieses die Laserstrahlen teilweise verdeckt, um eine Schattenkante 32 auf die Sensoren zu werfen. Jeder der drei Sensoren 30 mißt nun den Abstand 34 der Außenkante des Objekts vom Nullpunkt 36. Ein gemeinsamer Auswerterechner liest diese drei Meßwerte ein. Aufgrund der tangentialen Beleuchtung des Gegenstandes liegt jedoch im Gegensatz zu der Verwendung von Triangulationssensoren keine Information über den Ort der Antastung entlang dem jeweiligen Laserstrahl vor. Der entsprechende Kreis wird berechnet als derjenige Kreis, der sich an die parallel zum Laserstrahl verlaufenden Geraden 38 tangential anschmiegt. Da die Winkel der Geraden 38 zueinander bekannt sind, kann aus diesen Angaben der drei Tangenten der Kreis eindeutig bestimmt werden.

Bei einer unbekannten Winkellage des zu messenden Gleichdicks können die Laserscanner um dieses gedreht werden.

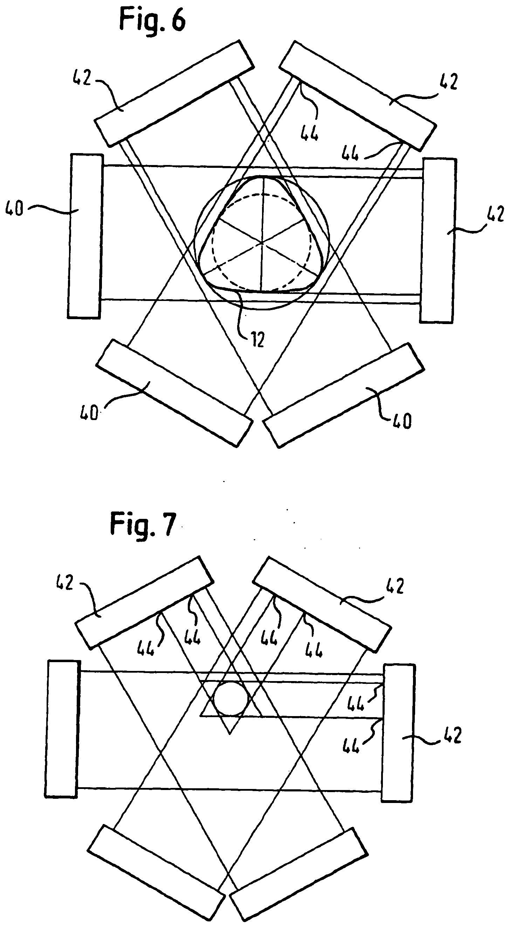

Die in Fig. 6 und 7 dargestellte Vorrichtung besteht aus drei Laserscannern 40, 42, die in einem gleichmäßigen Winkelabstand um das Gleichdick angeordnet sind. Die Laserscanner besitzen einen Laser 40, dessen Laserstrahl in schneller Folge parallel durch das Meßfeld verschoben wird und dabei einen ausgedehnten Bereich auf dem Sensor 42 ausleuchtet. Das Gleichdick 12 wirft zwei Schattenkanten 44 auf den Sensor 42. Wie besonders gut aus Fig. 7 ersichtlich, entstehen bei der Vorrichtung insgesamt sechs Schattenkanten mit zugehörigen Geraden, die an dem zu messenden Gleichdick 12 anliegen. Eine Justierung der Laserscanner im Bezug auf das zu messende Werkstück ist nicht erforderlich, solange sich das Werkstück vollständig innerhalb des Lichtfeldes jedes Laserscanners befindet. Bei diesem Verfahren ist es jedoch nicht möglich, für einen Gleichdick mit nach innen gewölbten, konkaven Seiten den minimalen Radius richtig zu bestimmen.

## Patentansprüche

1. Verfahren zur Messung von Durchmesser und Unrundheit von in ihrer Längsrichtung vorbewegten Rundprodukten an Walzstraßen, mit einer Meßeinrichtung aus drei oder mehr Laserscannern, die je einen lichtempfindlichen Sensor (42) und einen Laser (40) aufweisen, der zur Beleuchtung eines Bereichs des Sensors auf diesen ausgerichtet ist, wobei das Werkstück einen vollständig innerhalb des ausgeleuchteten Bereichs des Sensors liegenden Schatten wirft, wobei mit jedem Laserscanner zwei parallele Geraden bestimmt werden, die den maximalen Abstand zwischen zwei Außenkanten des Werkstücks auf gegenüberliegenden Seiten wiedergeben das folgende Verfahrensschritte aufweist:
- aus einer Schattenkante (38, 44), die das Rundprodukt auf den Sensor des Laserscanners wirft, wird eine an der Außenkante des Rundprodukts anliegende Gerade berechnet, die parallel zu dem Laserstrahl verläuft,
**dadurch gekennzeichnet, daß**
wenn mehr als drei nicht parallele Geraden gemessen werden, sämtliche Tripel von Geraden zur Berechnung von Tangenten verwendet werden, wobei
- zu je drei ermittelten Geraden eine Auswerteeinrichtung einen Kreis errechnet, an dem die Geraden als Tangenten anliegen,
- die Berechnung eines Kreises mehrfach wiederholt wird und
- aus den berechneten Kreisdurchmessern der Durchmesser und die Unrundheit des Rundprodukts bestimmt werden, wobei die Unrundheit als Differenz aus kleinstem sowie größtem Durchmesser bestimmt wird.

2. Verfahren nach Anspruch 1, **dadurch gekennzeichnet, daß** die Meßeinrichtung bei Wiederholung der Messung um das Rundprodukt gedreht wird.

3. Verfahren nach Anspruch 1 oder 2, **dadurch gekennzeichnet, daß** die Messung der Laserscanner der Meßeinrichtung synchronisiert auf ein Triggersignal ansprechend verfolgt.

4. Verfahren nach einem der Ansprüche 1 bis 3, **dadurch gekennzeichnet, daß** die Meßeinrichtung der Laserscanner zu unterschiedlichen Zeitpunkten mißt und die Auswerteeinrichtung aus mehreren Messungen einen Bewegungsvektor des Rundprodukts bestimmt.

5. Vorrichtung zur Messung von Durchmesser und Unrundheit von in ihrer Längsrichtung vorbewegten Rundprodukten an Walzstraßen, mit einer Auswerteeinrichtung mit drei oder mehr Laserscannern,
- die Je einen lichtempfindlichen Sensor (42) und einen Laser (40) aufweisen, der zur Beleuchtung eines Bereichs des Sensors auf diesen ausgerichtet ist,
wobei das Werkstück einen vollständig innerhalb des ausgeleuchteten Bereichs des Sensors liegenden Schatten wirft,
- die im wesentlichen in gleichen Winkelabständen zueinander angeordnet sind,
- und deren laserstrahlen das Rundprodukt (12) derart beleuchten, daß das Rundprodukt jewells unter Bildung von zwei Schattenkanten einen Schatten (44) vollständig Innerhalb des ausgeleuchteten Bereichs des Sensors (42) wirft,
**dadurch gekennzeichnet, daß**
- die Auswerteeinrichtung wenn mehr als drei nicht parallele Geraden gemessen werden, sämtliche Tripel von Geraden zur Berechnung von Tangenten verwendet werden und zu je drei ermittelten Geraden eine Auswerteeinrichtung einen Kreis errechnet, an dem die Geraden als Tangenten anliegen,
- die Berechnung eines Kreises mehrfach wiederholt wird und
- aus den gemessenen Kreisdurchmessern der Durchmesser und die Unrundheit des Rundprodukts bestimmt werden, wobei die Unrundheit als Differenz aus kleinstem sowie größtem Durchmesser bestimmt wird.

6. Vorrichtung nach Anspruch 5, **dadurch gekennzeichnet, daß** die Laserscanner in der durch ihre Laserstrahlen aufgespannten Ebene drehbar sind.

## Claims

1. Method for measurement of diameter and unroundness of round products moving in their lengthwise direction on rolling mills, with a measuring device of three or more laser scanners, which each have a light sensitive sensor (42) and a laser (40), which is aligned on the sensor for illumination of an area of it, whereby the workpiece casts a shadow lying completely within the illuminated area of the sensor, wherein with each laser scanner, two parallel straight lines are determined which represent the maximum distance between two outer edges of the workpiece on opposite sides, that has the following procedure steps:
- from a shadow edge (38,44) which the round product casts on the sensor of the laser scanner, a straight line is calculated which lies on the outer edge of the round product, which runs parallel to the laser beam
**characterized in that**
- if more than three non-linear straight lines are measured, all triples of straight lines are used to calculate tangents, wherein
- for each three determined straight lines an evaluation device calculates a circle, on which the straight lines lie as tangents,
- the calculation of a circle is multiply repeated and
- the diameter and the unroundness of the round product are determined from the calculated circle diameters, whereby the unroundness is determined as a difference from the smallest and the largest diameter.

2. Method according to Claim 1, **characterized in that** the measuring device is rotated around the work piece with the repetition of the measurement.

3. Method according to Claim 1 or 2, **characterized in that** the measurement by the laser scanner of the measurement device is done synchronized in response to a trigger signal.

4. Method according to one of the Claims 1 to 3, **characterized in that** the measurement device of the laser scanner measures at different points in time and the evaluation device determines a movement vector of the round product from several measurements.

5. Device for measurement of the diameter and unroundness of round products moved in their lengthwise direction on rolling mills, with an evaluation device of three or more laser scanners,
- which each have a light sensitive sensor (42) and a laser (40), which for illumination of an area of the sensor is aligned on it, whereby the workpiece casts a shadow lying completely within the illuminated area of the sensor,
- which are to a large extent arranged in an equal angle distance to each other,
- and laser beams of which illuminate the round product (12) in such a way that the round product under the generation of two shadow edges casts a shadow (44) completely within the illuminated area of the sensor (42),
**characterized in that**
- an evaluating device, if more than three non-linear straight lines are measured, all triples of straight lines are used to calculate tangents and calculates a circle for each of three determined straight lines, on which the straight lines lie as tangents,
- the calculation of a circle is multiply repeated and
- the diameter and the unroundness of the round product are determined from the measured circle diameters, whereby the unroundness is determined as a difference from the smallest as well as the largest diameter.

6. Device according to Claim 5, **characterized in that** the laser scanners are rotatable in the plane spanned through their laser beams.

## Revendications

1. Procédé pour mesurer diamètre et excentricité de produits circulaires avancés dans leur sens longitudinal sur des trains de laminoir, avec un dispositif de mesure se composant de trois scanneurs laser ou plus, qui comportent chacun un capteur photosensible (42) et un laser (40) lequel, pour éclairer une zone du capteur, est orienté sur celui-ci, l'objet projetant une ombre située complètement à l'intérieur de la zone éclairée du capteur, Avec deux droites parallèles sont déterminées par chaque scanner laser, qui représente la distance maximale entre deux bords extérieurs de la pièce à usiner sur des côtés opposés,procédé lequel comporte les étapes suivantes de procédé :
- à partir d'un bord d'ombre (38, 44) que le produit circulaire projette sur le capteur du scanneur laser est calculée une droite adjacente au bord extérieur du produit circulaire, laquelle est parallèle au rayon laser,
**caractérisé en ce que**
- si plus de trois lignes de arallele non sont mesurés, tous les triplets de lignes utilisées pour calculer les tangentes, dans lequel
- pour les trois droites déterminées, un dispositif d'évaluation calcule un cercle auquel les droites sont tangentes,
- le calcul d'un cercle est répété plusieurs fois et
- à partir des diamètres de cercle calculés sont déterminés le diamètre et l'excentricité du produit circulaire, l'excentricité étant déterminée comme différence à partir du plus petit et du plus grand diamètre.

2. Procédé selon la revendication 1, **caractérisé en ce que** le dispositif de mesure est tourné autour du produit circulaire lors de la réitération de la mesure.

3. Procédé selon la revendication 1 ou 2, **caractérisé en ce que** la mesure des scanneurs laser du dispositif de mesure suit de manière synchronisée en réponse à un signal de déclenchement.

4. Procédé selon l'une des revendications 1 à 3, **caractérisé en ce que** le dispositif de mesure des scanneurs laser mesure à des moments différents et le dispositif d'évaluation détermine un vecteur de mouvement du produit circulaire à partir de plusieurs mesures.

5. Dispositif pour mesurer diamètre et excentricité de produits circulaires avancés dans leur sens longitudinal sur des trains de laminoir, avec un dispositif d'évaluation avec trois scanneurs laser ou plus,
- lesquels comportent chacun un capteur photosensible (42) et un laser (40) qui, pour éclairer une zone du capteur, est orienté sur celui-ci, l'objet projetant une ombre située complètement à l'intérieur de la zone éclairée du capteur,
- lesquels sont disposés essentiellement avec les mêmes distances angulaires les uns par rapport aux autres,
- et dont les rayons laser éclairent le produit circulaire (12) de telle sorte que le produit circulaire projette, en formant deux bords d'ombre, une ombre (44) complètement à l'intérieur de la zone éclairée du capteur (42),
**caractérisé en ce que**
- le dispositif d'évaluation, si plus de trois lignes de arallele non sont mesurés, tous les triplets de lignes utilisées pour calculer les tangentes, et pour chacune des trois droites déterminées, calcule un cercle auquel les droites sont tangentes,
- le calcul d'un cercle est répété plusieurs fois et
- à partir des diamètres de cercle mesurés sont déterminés le diamètre et l'excentricité du produit circulaire, l'excentricité étant déterminée comme différence à partir du plus petit et du plus grand diamètre.

6. Dispositif selon la revendication 5, **caractérisé en ce que** les scanneurs laser sont rotatifs dans le plan tendu par les rayons laser.
